# NEUE EUROPÄISCHE PATENTSCHRIFT

(11) **EP 2 774 790 B2**
(45) Veröffentlichungstag und Bekanntmachung des Hinweises auf die Entscheidung über den Einspruch: **20.03.2019**
(45) Hinweis auf die Patenterteilung: 23.12.2015
(21) Anmeldenummer: 14157521.7
(22) Anmeldetag: 03.03.2014
(51) Int. Cl.: B60H 1/00

(54) **Klimatisierungsvorrichtung für ein Kraftfahrzeug und Steuerungsverfahren dafür**
Air conditioning device for a motor vehicle and control method for the same
Dispositif de climatisation de véhicule automobile et procédé de commande associé

(30) Priorität: 09.03.2013 DE 102013004129
(43) Veröffentlichungstag der Anmeldung: 10.09.2014
(73) Patentinhaber: Volkswagen Aktiengesellschaft, 38440 Wolfsburg (DE)
(72) Erfinder: Grimke, Dirk, 29399 Wahrenholz (DE); Brandes, Thomas, 38350 Helmstedt (DE)

(56) Entgegenhaltungen:
- EP-A1- 0 267 101
- EP-A1- 0 337 382
- EP-A1- 1 510 375
- WO-A1-02/32705
- DE-A1- 3 016 679
- DE-A1- 19 928 834
- DE-A1-102004 008 183
- DE-A1-102004 034 055
- DE-A1-102008 017 327
- DE-A1-102008 049 637
- DE-A1-102010 029 495
- DE-A1-102011 014 407
- DE-C1- 3 936 776
- DE-C1- 19 731 369
- FR-A1- 2 459 511
- JP-A- H08 310 222
- JP-A- H11 268 514
- US-A1- 2002 134 093
- US-A1- 2003 056 531
- US-A1- 2005 115 704
- US-A1- 2008 035 745
- Deutsche Überzetzung der JP H11 265814 A

## Beschreibung

Die Erfindung bezieht sich auf ein Verfahren zur Temperaturregulierung im Innenraum eines Kraftfahrzeugs welches über eine Klimatisierungsvorrichtung für ein Kraftfahrzeug verfügt, umfassend
- einen Einlasskanal zur Einleitung eines Luftstroms,
- einen wenigstens von Teilen des Luftstroms durchströmbaren Verdampfer eines Kältemittelkreises und
- einen wenigstens von Teilen des Luftstroms durchströmbaren und in Strömungsrichtung hinter dem Verdampfer angeordneten Heizwärmetauscher,
   wobei ein Mengenverhältnis eines den Verdampfer durchströmenden Luftstromanteils zu einem an dem Verdampfer vorbei geführten Luftstromanteil mittels einer verschwenkbaren Verdampferbypassklappe einstellbar ist und
wobei ein Mengenverhältnis eines den Heizwärmetauscher durchströmenden Luftstromanteils zu einem an dem Heizwärmetauscher vorbei geführten Luftstromanteil mittels einer verschwenkbaren Temperaturmischklappe einstellbar ist, wobei die Temperaturmischklappe und die Verdampferbypassklappe mechanisch miteinander verbunden und ihre Verschwankbewegungen dadurch zwangsgekoppelt sind.
Des Weiteren weist die Klimatisierungsvorrichtung, eine Temperatursensorik zur Erfassung der jeweils aktuellen Innenraumtemperatur und eine mit der Temperatursensorik und der Klimatisierungsvorrichtung zu einem Temperaturregelkreis verbundene Steuereinheit mit einer Schnittstelle zur Einstellung einer Zieltemperatur auf.

Eine derartige Klimatisierungsvorrichtung ist bekannt aus der JP 11268514 A.

Moderne Klimatisierungsanlagen für Kraftfahrzeuge umfassen in der Regel drei grundsätzlich unabhängig voneinander steuerbare Komponenten, die jedoch zur Erzielung einer definierten Konditionierung der Fahrzeuginnenluft in geeigneter Weise zusammenwirken müssen. Ein Kältemittelkreis mit Kompressor, Verdampfer und Kondensator trägt im Wesentlichen zur Abkühlung und Entfeuchtung bei. Er wechselwirkt mit der Fahrzeuginnenluft über den als Luft/Kältemittel-Wärmetauscher ausgebildeten Verdampfer. Ein mit dem Motorkühlwasser verbundener Wasserkreislauf trägt im Wesentlichen zur Erwärmung bei. Er wechselwirkt mit der Fahrzeuginnenluft über einen als Luft/Wasser-Wärmetauscher ausgebildeten Heizwärmetauscher. Der Heizwärmetauscher kann alternativ oder zusätzlich elektrisch beheizbar sein. Die Wechselwirkung mit der Luft zu deren Konditionierung erfolgt, indem die Wärmetauscher von einem Luftstrom durchströmt werden, der als Umluft- und/oder Frischluftstrom von einem Gebläse erzeugt wird und über Luftleitelemente, insbesondere Klappen steuerbar ist. Je nachdem welche der vorgenannten Komponenten von einer Steuerungsmaßnahme vorwiegend betroffen ist, spricht man von luftseitiger, wasserseitiger bzw. elektrischer oder kältemittelseitiger Steuerung.

Bei der in der oben genannten, gattungsbildenden DE 10 2010 029 495 A1 offenbarten Klimatisierungsvorrichtung ist ein mit seinem Einlasskanal an ein Gebläse angeschlossenes Gehäuse realisiert, in dem in Strömungsrichtung hintereinander der Verdampfer und der Heizwärmetauscher angeordnet sind. Beide Wärmetauscher füllen dabei den Gehäusequerschnitt nicht vollständig, was es notwendig machen würde, dass jeder der Wärmetauscher von der Gesamtheit des Luftstroms auf dessen Weg vom Gebläse zum Auslass der Klimatisierungsvorrichtung durchströmt würde. Vielmehr ist jedem Wärmetauscher benachbart ein Spalt oder Kanal vorgesehen, über welchen Luft am betreffenden Wärmetauscher vorbeigeleitet werden kann. Diese Umgehungswege sind jeweils durch eine Klappe ganz oder teilweise verschließbar. Auf diese Weise lässt sich das Verhältnis des Luftstromanteils, welcher einen Wärmetauscher durchströmt, zu demjenigen Luftstromanteil, der an dem betreffenden Wärmetauscher vorbeigeführt wird, einstellen. Diejenige Klappe, mit der das Maß der Umgehung des Heizwärmetauschers steuerbar ist, wird hier als Temperaturmischklappe bezeichnet, da sie das Verhältnis der sich hinter dem Heizwärmetauscher in einer Mischkammer mischenden Anteile der vom Verdampfer kommenden Kaltluft und der vom Heizwärmetauscher kommenden Warmluft bestimmt und so die Temperatur der Mischluft einstellt. Eine solche Temperaturmischklappe ist auch von älteren Klimatisierungsvorrichtungen her bekannt. Als Neuerung offenbart die vorgenannte Druckschrift eine zusätzliche, das Maß der Umgehung des Verdampfers regulierende Klappe, die hier als Verdampferbypassklappe bezeichnet wird. Neben der wasserseitigen (bzw. elektrischen) und kältemittelseitigen Steuerung lässt sich die Konditionierung der Fahrzeuginnenluft somit zusätzlich luftseitig durch die Einstellung des Gebläses, die Stellung der Temperaturmischklappe und die Stellung der Verdampferbypassklappe regulieren. Nachteilig dabei ist, dass für den mit der Verdampferbypassklappe eingeführten, zusätzlichen Regulierungsfreiheitsgrad ein zusätzliches Stellorgan, insbesondere ein zusätzlicher Elektromotor erforderlich ist, was aus Bauraum-, Gewichts- und Kostengründen ungünstig ist. Des Weiteren offenbart die JP 11268514 eine Klimatisierungseinrichtung, bei der eine Temperaturmischklappe mit einer Verdampferbypassklappe mechanisch miteinander gekoppelt sind.

Aus der DE 10 2004 034 055 A1 ist ferner eine Klimatisierungseinrichtung bekannt, bei der die Temperatur am Verdampfer in einem bestimmten Temperaturbereich geregelt wird.

Es ist die Aufgabe der vorliegenden Erfindung, ein gattungsgemäßes Verfahren zur Temperaturregulierung im Innenraum eines Kraftfahrzeugs mit einer Klimatisierungsvorrichtung derart weiterzubilden, dass dieses eine einfache Möglichkeit der Temperaturregelung bietet.

Diese Aufgabe wird in Verbindung mit den Merkmalen des Oberbegriffs von Anspruch 1 dadurch gelöst, dass bei einer eingestellten Zieltemperatur unterhalb einer ersten, niedrigeren Grenztemperatur Variationen der Innenraumtemperatur allein durch entsprechende Variation des Verdampferbetriebes angesteuert werden und bei einer eingestellten Zieltemperatur zwischen der ersten Grenztemperatur und einer zweiten, höheren Grenztemperatur Variationen der Innenraumtemperatur allein durch entsprechende Variation der Stellung der Verdampferbypassklappe angesteuert werden.

Eine bevorzugte Ausführungsform der Erfindung ist Gegenstand des abhängigen Patentanspruchs.

Der Erfindung liegt zunächst die Erkenntnis zugrunde, dass beim üblichen Betrieb einer Klimatisierungsvorrichtung für ein Kraftfahrzeug der mit der Verdampferbypassklappe eingeführte Regulierungsfreiheitsgrad kaum jemals zur Gänze ausgenutzt wird. Eine gewisse Einschränkung, wenngleich nicht vollständige Aufgabe dieses Freiheitsgrades ist somit ohne Komfortverlust tolerierbar. Insbesondere haben die Erfinder erkannt, dass sich beim praktischen Betrieb auch bei grundsätzlich bestehender Möglichkeit einer vollständig unabhängigen Einstellung von Verdampferbypassklappe und Temperaturmischklappe gleichwohl eine gewisse Korrelation zwischen den Klappenstellungen ergibt. Diese Korrelation wird erfindungsgemäß durch die mechanische Verbindung der Klappen und die daraus resultierende Zwangskopplung ihrer Verschwenkbewegungen so realisiert, dass nur noch ein einziges, beiden Klappen gemeinsames Stellorgan, insbesondere ein Elektromotor erforderlich ist, um sämtliche beim praktischen Betrieb erforderlichen Klappenstellungen zu realisieren. Evtl. Flexibilitätsverluste im Hinblick auf die Realisierung relativer Klappenstellungen können durch wasserseitige (bzw. elektrische) und/oder kältemittelseitige Steuerungsmaßnahmen ohne weiteres kompensiert werden.

Am einfachsten wären die beiden Klappen mittels einer gemeinsamen Koppelstange, welche an jeder von ihnen angelenkt ist, zu verbinden. Hierdurch würde eine rein lineare Korrelation der Verschwenkbewegungen realisiert, die jedoch wohl nur in einfach gelagerten Fällen dem oben genannten Ziel der Beibehaltung des durch die Verdampferbypassklappe bedingten Freiheitsgrades in praktisch relevantem Umfang gerecht würde. Bei einer erfindungsgemäßen Ausführungsform ist daher eine rotierbar gelagerte Kurvenscheibe mit wenigstens einer Kurvennut vorgesehen, in der wenigstens ein Kulissenstein einer mit der Temperaturmischklappe und der Verdampferbypassklappe verbundenen Hebelanordnung geführt ist. Es ist also eine mittelbare Verbindung der beiden Klappen miteinander über die Kurvenscheibe vorgesehen. Die konkrete Ausgestaltung der Korrelationsfunktion der Verschwenkbewegungen, d.h. des die Klappen koppelnden kinematischen Gesetzes, wird dabei durch die Formgebung der Kurvennut in der Kurvenscheibe sowie ggf. durch die Gestaltung der Hebelanordnung vorgegeben. Bevorzugt sind beide Klappen auf diese Weise an die Kurvenscheibe angebunden. Es ist jedoch auch denkbar, dass eine der Klappen über eine mit festen Anlenkpunkten versehene Koppelstange, einen Riementrieb, eine Zahnstange oder auf ähnliche Weise an die Kurvenscheibe angebunden ist.

Bei einer ersten Ausführungsform der vorgenannten, bevorzugten Variante ist vorgesehen, dass die Schwenkachse der Temperaturmischklappe und/oder die Schwenkachse der Verdampferbypassklappe mit einem starren Schwenkhebel versehen ist, an dessen freiem Ende ein in der Kurvennut der Kurvenscheibe geführte Kulissenstein angeordnet ist. Alternativ hierzu kann vorgesehen sein, dass die Schwenkachse der Temperaturmischklappe und/oder die Schwenkachse der Verdampferbypassklappe mit einem starren Schwenkhebel versehen ist, der an seinem freien Ende an einer schwenkbar gelagerten und sich über ihren Schwenkpunkt hinaus erstreckenden Schwinge angelenkt ist, an deren der Anlenkstelle abgewandten Ende ein in der Kurvennut der Kurvenscheibe geführter Kulissenstein angeordnet ist. Während bei der erstgenannten Variante also im Wesentlichen eine Direktverbindung zwischen dem Schwenkhebel und der Kurvenscheibe realisiert ist, weist die letztgenannte Variante eine indirekte Verbindung zwischen Schwenkhebel und Kurvenscheibe über besagte Schwinge auf, sodass mit einer zusätzlichen Übersetzung ein höherer Komplexitätsgrad der Bewegungskorrelation der Klappen erzielt werden kann. Beide Varianten sind insofern kombinierbar, als eine der Klappen mittels der ersten und die andere Klappe mittels der zweiten Koppelvariante an die Kurvenscheibe angebunden sein kann.

Günstigerweise ist vorgesehen, dass die Kurvenscheibe und jeder Schwenkhebel sowie jede Schwinge (falls vorhanden) außerhalb des den Verdampfer, den Heizwärmetauscher sowie die Temperaturmischklappe und die Verdampferbypassklappe enthaltenden Gehäuses angeordnet ist, dessen Außenwandung zur Ankopplung jeder der Klappenschwenkachsen der Temperaturmischklappe und der Verdampferbypassklappe von diesen durchsetzt ist. Die gesamte Koppelmechanik zwischen den Klappen wird auf diese Weise nach außerhalb des Gehäuses verlegt, sodass das Gehäuse in seinem Inneren gemäß strömungs- und klimatechnisch optimierten Vorgaben gestaltet sein kann. Insbesondere können herkömmliche Klimatisierungsvorrichtung, bei denen ebenfalls die Gehäusewandungen zur Ankopplung der jeweiligen Stellorgane, insbesondere Elektromotoren, von den Klappenschwenkachsen durchsetzt sind, verwendet und erfindungsgemäß umgerüstet werden.

Günstigerweise sind die Kurvenscheibe und jede Schwinge (falls vorhanden) an der Außenwandung des Gehäuses gelagert. Die erfindungsgemäße Klimatisierungsvorrichtung kann dadurch mit allen erforderlichen Komponenten als Modul ausgebildet werden, was im Hinblick auf Produktion und Montage vorteilhaft ist.

Die Kurvenscheibe ist bevorzugt von einem Klima-Steuergerät angesteuert motorisch bewegbar. Denkbar wäre zwar auch eine manuelle Ansteuerung der Kurvenscheibe, beispielsweise über Bowdenzüge. Im Hinblick auf Kompaktheit der Anordnung und Ansteuerungskomfort ist jedoch bevorzugt ein Elektromotor als Stellorgan für die Kurvenscheibe vorgesehen, der voll- oder teilautomatisch von einem entsprechenden Steuergerät angesteuert wird. Auch im Hinblick auf die Momentenübertragung hat die Momenteneinleitung in die Kurvenscheibe Vorteile gegenüber einer Momenteneinleitung an der Schwenkachse einer der gekoppelten Klappen.

Zur Temperaturregulierung im Innenraum eines Kraftfahrzeugs, welches über eine Klimatisierungsvorrichtung für ein Kraftfahrzeug, wie im Oberbegriff des Anspruchs 1 beschrieben, hat sich ein Verfahren als besonders vorteilhaft erwiesen, bei dem bei einer eingestellten Zieltemperatur unterhalb einer ersten, niedrigeren Grenztemperatur Variationen der Innenraumtemperatur allein durch entsprechende Variation des Verdampferbetriebs angesteuert werden. In einem unteren Zieltemperatursegment bleiben somit die Klappen unbetätigt; Temperaturvariationen im Innenraum werden allein durch unterschiedliche Ansteuerung des Verdampfers, d.h. insbesondere durch unterschiedliche Ansteuerungen der Betriebstemperatur des Verdampfers realisiert. Typischerweise ist dabei die Verdampferbypassklappe geschlossen, sodass der gesamte Luftstrom den Verdampfer durchsetzt, und die Temperaturmischklappe so eingestellt, dass der gesamte Luftstrom am Heizwärmetauscher vorbeigeleitet wird.

Oberhalb der ersten Grenztemperatur kann dieser sequentielle Ansatz beibehalten werden. So kann bei einer Weiterbildung der Erfindung vorgesehen sein, dass bei einer eingestellten Zieltemperatur zwischen der ersten Grenztemperatur und einer zweiten, höheren Grenztemperatur Variationen der Innenraumtemperatur allein durch entsprechende Variation der Stellung der Verdampferbypassklappe angesteuert werden. Mit anderen Worten bleiben der Verdampferbetrieb und Temperaturmischklappe bei ihren Einstellungen an der ersten Grenztemperatur. Lediglich der Anteil des Luftstroms, der den Verdampfer passiert, wird variiert, insbesondere mit steigender Zieltemperatur verringert.

Erst bei Überschreitung der zweiten Grenztemperatur durch die eingestellte Zieltemperatur werden bei einer bevorzugten Ausführungsform der Erfindung Variationen der Innenraumtemperatur durch entsprechende Variation der Temperaturmischklappe, und zwar allein dadurch, angesteuert. Insbesondere ist es dann erforderlich, wenigstens einen Teil des Luftstroms - und zwar umso mehr, je höher die eingestellte Zieltemperatur - zum Gegenheizen durch den Heizwärmetauscher zu schicken.

Dies verlangt, wie der Fachmann unmittelbar erkennen wird, nach "linearen" Abschnitten in der mechanischen Kopplung von Verdampferbypassklappe und Temperaturmischklappe, d.h. Bewegungsabschnitten der Koppelmechanik, in denen jeweils nur eine der angekoppelten Klappenschwenkachsen mit einem Drehmoment beaufschlagt wird. Im Fall einer Ankopplung über einen Kulissenstein, der in einer Kurvennut einer rotierbaren Kurvenscheibe geführt ist, kann dies z.B. über einen zum Drehpunkt der Kurvenscheibe koaxialen, teilkreisförmigen Nutabschnitt realisiert werden. Auch teleskopartige Bereiche eines Koppelgestänges können zur Realisierung solcher "linearen" Abschnitte genutzt werden.

Der erläuterte, sequentielle Ansatz hat den Vorteil, dass der insbesondere bei Elektro- oder Hybridfahrzeugen besonderes energiekritische Heizwärmetauscher in der Tat nur dann eingesetzt wird, wenn alle anderen Heizmöglichkeiten ausgeschöpft sind. Dies kann zu einem deutlichen Reichweitenzuwachs führen.

Ein anderer Ansatz der Ansteuerung soll hier als paralleler Ansatz bezeichnet werden. Hier werden Variationen der Innenraumtemperatur grundsätzlich durch entsprechende, simultane Variationen der Stellung der Verdampferbypassklappe und der Stellung der Temperaturmischklappe angesteuert. Das hat den Vorteil einer spürbaren Reduktion des Geräuschniveaus, da das Öffnen des Verdampferbypassklappe den luftseitigen Druckverlust reduziert.

Gesteigert werden kann die Wirkung des parallelen Ansatz noch dadurch, dass, wie bei einer Weiterbildung dieser Variante vorgesehen, für jede Variation der Innenraumtemperatur zusätzlich eine simultane Variation des Verdampferbetriebs angesteuert wird.

Unabhängig vom speziellen Ansteuerungsansatz kann die Einstellung der Zieltemperatur auf unterschiedliche Weisen erfolgen. Beispielsweise kann die Zieltemperatur über einen manuellen Wahlschalter vom Benutzer manuell eingestellt werden. Alternativ kann auch im Rahmen einer komplexeren Klimaautomatik eine automatisierte Einstellung der Zieltemperatur erfolgen.

Weitere Merkmale und Vorteile der Erfindung ergeben sich aus der nachfolgenden, speziellen Beschreibung und den Zeichnungen.

Es zeigen:
- Figur 1: Figur 1 eine schematische Darstellung einer erfindungsgemäßen Klimatisierungsvorrichtung,
- Figur 2: eine schematische Darstellung einer leicht modifizierten Klimatisierungsvorrichtung senkrecht zur Ansichtsrichtung von Figur 1,
- Figur 3: eine Graphik zur Illustration eines ersten Steuerungsansatzes,
- Figur 4: eine Graphik zur Illustration eines zweiten Steuerungsansatzes,

Gleiche Bezugszeichen in den Figuren deuten auf gleiche oder analoge Bauteile hin.

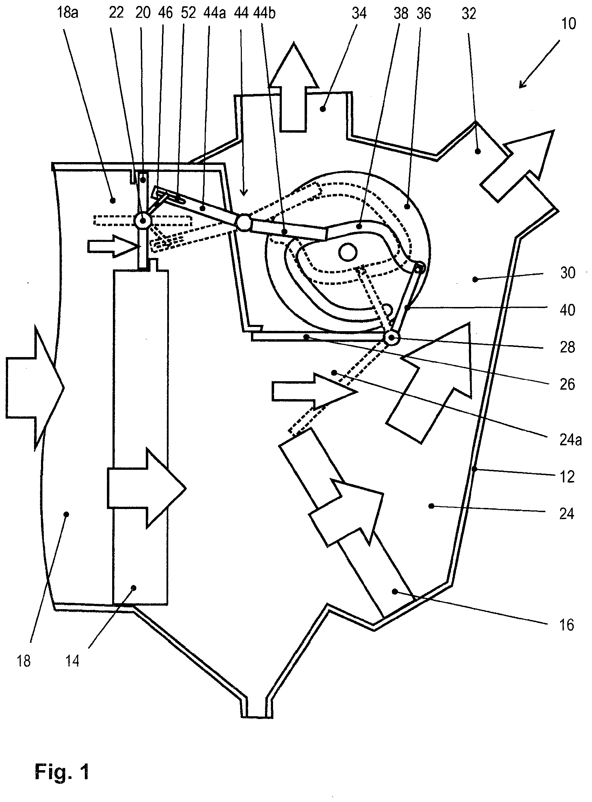

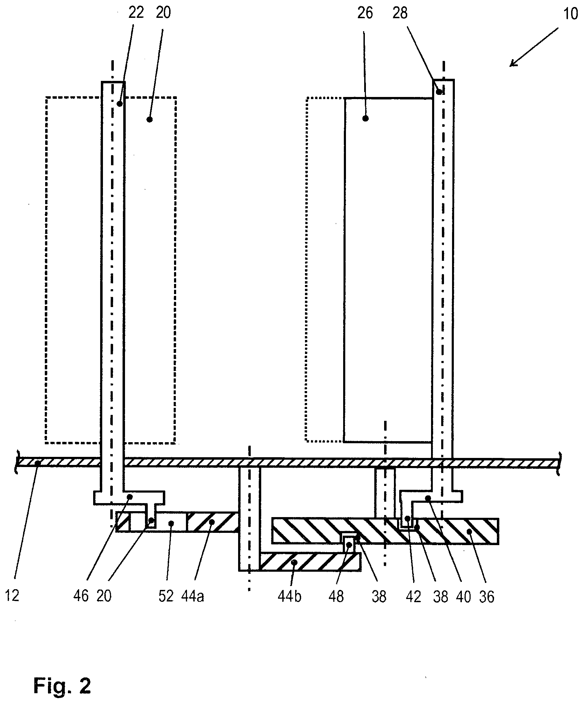

Figur 1 zeigt eine schematische Darstellung einer erfindungsgemäßen Klimatisierungsvorrichtung 10, die in leichter Modifikation in Figur 2 in einer Ansicht senkrecht dazu dargestellt ist. Beide Figuren sollen nachfolgend gemeinsam beschrieben werden. Es sei ausdrücklich darauf hingewiesen, dass insbesondere in Figur 1 die Darstellung unterschiedlicher Ebenen der besseren Anschaulichkeit halber zeichnerisch nicht vollkommen korrekt dargestellt ist.

In einem Gehäuse 12 sind ein mit einem nicht näher dargestellten Kältemittelkreis verbundener Verdampfer 14 und ein mit einem nicht näher dargestellten Motorkühlwasserbereich verbundener Heizwärmetauscher 16, der alternativ oder zusätzlich auch elektrisch beheizbar sein kann, angeordnet. Der als Luft-Kältemittel-Wärmetauscher ausgebildete Verdampfer 14 durchsetzt den überwiegenden Anteil des Querschnitts eines Einlasskanals 18, der mit einem nicht näher dargestellten Gebläse koppelbar ist. Das Gebläse vermag einen Luftstrom zu erzeugen, von dem ein Anteil den Verdampfer 14 durchströmen kann und ein weiterer Anteil am Verdampfer 14 vorbei durch den nicht vom Verdampfer 14 durchsetzte Querschnittsbereich 18a, der hier als Verdampfer-Umgehungspfad bezeichnet wird, des Einlasskanals 18 strömen kann. Diese grundsätzlichen Strömungswege sind in Figur 1 mit Pfeilen gekennzeichnet.

Der Verdampfer-Umgehungspfad 18a ist von einer Verdampferbypassklappe 20 durchsetzt, die um eine Schwenkachse 22 schwenkbar gelagert ist. Wie in Figur 2 erkennbar, erfolgt die Lagerung der Schwenkachse 22 in der Wandung des Gehäuses 12. Je nach Schwenkstellung der Verdampferbypassklappe ist der Verdampfer-Umgehungspfad 18a geöffnet oder ganz oder teilweise geschlossen. Somit lässt sich durch Verschwenkung der Verdampferbypassklappe 20 das Mengenverhältnis der Luftstromanteile durch den Verdampfer 14 hindurch und um ihn herum einstellen. Hinter dem Verdampfer 14 mischt sich die Luft beider Wege wenigstens teilweise. In diesem Bereich ist der Heizwärmetauscher 16 angeordnet. Er durchsetzt einen Hauptkanal 24 teilweise, sodass der vom Verdampfer 14 bzw. Verdampfer-Umgehungspfad 18a kommende Luftstrom anteilig durch ihn hindurch oder über einen Heizwärmetauscher-Umgehungspfad 24a an ihm vorbeiströmen kann. Im Bereich des Heizwärmetauscher-Umgehungspfades 24a ist eine Temperaturmischklappe 26 angeordnet, die um eine Schwenkachse 28 schwenkbar gelagert ist. Wie aus Figur 2 erkennbar, erfolgt die Lagerung auch hier in der Außenwandung des Gehäuses 12. Je nach Schwenkstellung der Temperaturmischklappe 26 lässt sich somit das Verhältnis der den Heizwärmetauscher 16 durchströmenden und ihn umgehenden Luftstromanteile einstellen. In Strömungsrichtung hinter dem Heizwärmetauscher 16 ist eine Mischkammer 30 angeordnet, in der sich die vorgenannten Luftstromanteile mischen und von der Ausströmkanäle 32, 34, die mit unterschiedlichen Bereichen des Fahrzeuginnenraums verbunden sein können, abzweigen.

Zur gemeinsamen Ansteuerung der Verdampferbypassklappe 20 und der Temperaturmischklappe 26 ist eine Kurvenscheibe 36 vorgesehen, die, wie insbesondere in Figur2 erkennbar, drehbar an der Außenwandung des Gehäuses 12 gelagert ist. Die Kurvenscheibe 36 weist in ihrer Scheibenfläche eine Kurvennut 38 auf, die, wie bei der in Figur 1 gezeigten Variante, einteilig und auf einer Seite der Kurvenscheibe oder, wie in Figur 2 gezeigt, zweiteilig und auf beide Seiten der Kurvenscheibe 36 verteilt, angeordnet sein kann. Auch eine nicht dargestellte Variante einer mehrteilig ausgebildeten und auf nur einer Seite der Kurvenscheibe 36 angerordnete Kurvennut 38 ist denkbar. Die spezielle Anordnung und Formgebung der Kurvennut 38 hängt von der kinematischen Gesetzmäßigkeit ab, die zur Korrelation der Schwenkbewegungen von Verdampferbypassklappe 20 und Temperaturmischklappe 26 realisiert werden soll. Beide Klappen 20, 26 sind über je einen Hebelmechanismus mit der Kurvenscheibe 36 gekoppelt.

Beim gezeigten Ausführungsbeispiel ist die Temperaturmischklappe 26 im Wesentlichen direkt und die Verdampferbypassklappe 20 indirekt mit der Kurvenscheibe 36 gekoppelt. Dies ist insbesondere in Figur 2 erkennbar. Die Schwenkachse 28 der Tempertaturmischklappe 26 weist außerhalb der von ihr durchsetzten Wandung des Gehäuses 12 einen starr mit ihr verbundenen Schwenkhebel 40 auf, an dessen freiem Ende ein Kulissenstein 42 angeordnet ist, welcher in der Kurvennut 38 geführt ist. Eine Rotation der Kurvenscheibe 36, die vorzugsweise mittels eines nicht dargestellten motorischen Antriebs erfolgt, führt somit zu einer Verschwenkung des Schwenkhebels 40, die auf die Schwenkachse 28 übertragen wird und die Schwenkstellung der Temperaturmischklappe 26 verändert. In den Figuren ist eine erste Stellung der vorbezeichneten Elemente in durchgezogenen und eine weitere Stellung, die sich bei einer Rotation der Kurvenscheibe 36 um 180 Grad ergibt, mit gestrichelten Linien dargestellt. Durch die Form der Kurvennut 38 und die Länge und Relativanordnung des Schwenkhebels 40 ergibt sich ein mechanischer Zusammenhang zwischen der Stellung der Kurvenscheibe 36 und der Temperaturmischklappe 26.

Die Steuerung der Verdampferbypassklappe 20 erfolgt ähnlich, wobei jedoch eine Schwinge 44 als vermittelndes Element vorgesehen ist, die, wie insbesondere in Figur 2 erkennbar, drehbar an der Außenwandung des Gehäuses 12 gelagert ist. Die Schwinge 44 weist zwei starr miteinander verbundene Arme auf, wobei ein erster Arm 44a mit einem starr mit der Verdampferbypassklappen-Schwenkachse 22 verbundenen Schwenkhebel 46 gekoppelt ist, während ein zweiter Arm 44b an seinem freien Ende einen Kulissenstein 48 trägt, der in der Kurvennut 38 der Kurvenscheibe 36 geführt ist. Bei der gezeigten Ausführungsform erfolgt die Kopplung des Schwenkhebeles 46 mit dem ersten Arm 44a der Schwinge 44 über einen Koppelbolzen 50, der in ein Langloch 52 im Schwingenarm 44 geführt ist. Hierdurch lässt sich beispielsweise eine Bewegungshysterese der Schwenkbewegung der Verdampferbypassklappe realisieren. Das exakte kinematische Gesetz, über welches die Schwenkbewegung der Verdampferbypassklappe 20 mit der Rotationsbewegung der Kurvenscheibe 36 gekoppelt ist, hängt von der konkreten Form und relativen Anordnung der Kurvennut 38, der Schwinge 44 und der Anlenkung des Schwenkhebels 46 an der Schwinge 44 ab. Auch für die Verdampferbypassklappe 20 zeigen die Figuren eine erste beispielhafte Stellung mit durchgezogenen Linien und eine zweite beispielhafte Stellung, die einer Rotation der Kurvenscheibe 36 um 180 Grad entspricht, als gestrichelte Linien.

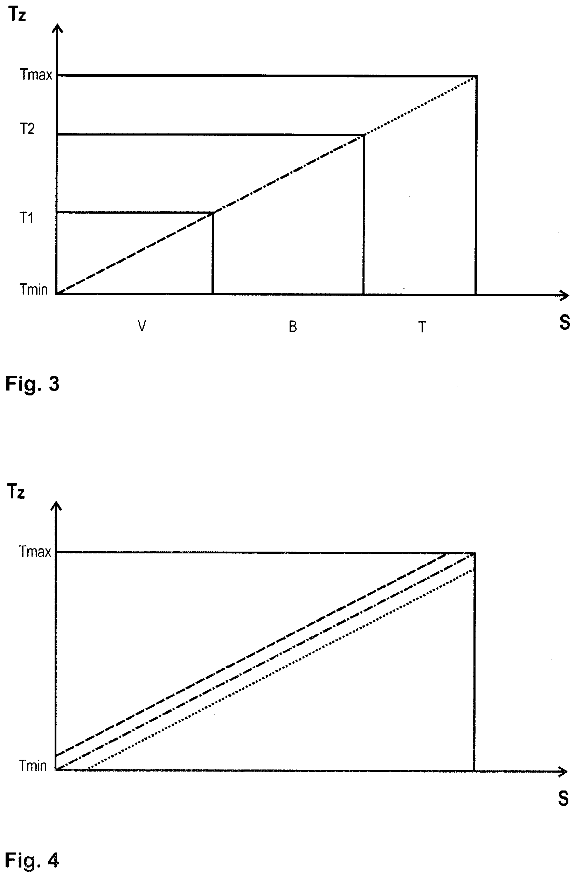

Figur 3 zeigt eine Graphik zur Illustration des sequentiellen Ansatzes zur Ansteuerung einer erfindungsgemäßen Klimatisierungsvorrichtung. Auf der Abszisse ist ein nicht näher zu bezeichnender Steuerungsparameter S aufgetragen. Die Ordinate repräsentiert die eingestellte Zieltemperatur Tz zwischen einer minimal einstellbaren Temperatur Tmin und einer maximal einstellbaren Temperatur Tmax. Zwischen Tmin und Tmax liegen zwei Grenztemperaturen, nämlich eine niedrigere, erste Grenztemperatur T1 und eine höhere, zweite Grenztemperatur T2. Bei Zieltemperatureinstellungen unterhalb T1 erfolgt jegliche Temperaturvariation durch Variation des Verdampferbetriebs, repräsentiert durch den Abszissenabschnitt V. Bei Zieltemperatureinstellungen zwischen T1 und T2 werden Temperaturvariationen ausschließlich durch Stellungsvariation der Verdampferbypassklappe, repräsentiert durch den Abszissenabschnitt B, realisiert. Oberhalb von T2 erfolgen Temperaturvariationen durch alleinige Stellungsvariation der Temperaturmischklappe, repräsentiert durch den Abszissenabschnitt T.

Figur 4 illustriert der parallelen Ansatz, bei dem jegliche Temperaturvariation durch eine simultane Variation von Verdampferbetrieb, Verdampferbypassklappen-Stellung und Temperaturmischklappen-Stellung erfolgt.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere ist der Fachmann frei in der Definition des gemäß den Anforderungen des Einzelfalls ausgelegten kinematischen Gesetzes zur Korrelation der Schwenkbewegungen der beide Klappen und dessen konkreter Umsetzung hinsichtlich Form, Dimensionierung und Relativanordnung der beteiligten Elemente.

### Bezugszeichenliste

- 10: Klimatisierungsvorrichtung
- 12: Gehäuse
- 14: Verdampfer
- 16: Heizwärmetauscher
- 18: Einlasskanal
- 18a: Umgehungspfad
- 20: Verdampferbypassklappe
- 22: Schwenkachse von 20
- 24: Hauptkanal
- 24a: Umgehungspfad
- 26: Temperaturmischklappe
- 28: Schwenkachse von 26
- 30: Mischkammer
- 32: Auslass
- 34: Auslass
- 36: Kurvenscheibe
- 38: Kurvennut
- 40: Schwenkhebel an 28
- 42: Kulissenstein
- 44: Schwinge
- 44a: erster Arm von 44
- 44b: zweiter Arm von 44
- 46: Schwenkhebel an 22
- 48: Kulissenstein
- 50: Koppelstift
- 52: Langloch
- Tz: Zieltemperatur
- Tmax: maximal einstellbare Tz
- Tmin: minimal einstellbare Tz
- T1: erste Grenztemperatur
- T2: zweite Grenztemperatur
- V: Variationsbereich Verdampferbetrieb
- B: Variationsbereich Verdampferbypassklappe
- T: Variationsbereich Temperaturmischklappe

## Patentansprüche

1. Verfahren zur Temperaturregulierung im Innenraum eines Kraftfahrzeugs, welches über eine Klimatisierungsvorrichtung (10) für ein Kraftfahrzeug, umfassend
- einen Einlasskanal (18) zur Einleitung eines Luftstroms,
- einen wenigstens von Teilen des Luftstroms durchströmbaren Verdampfer (14) eines Kältemittelkreises und
- einen wenigstens von Teilen des Luftstroms durchströmbaren und in Strömungsrichtung hinter dem Verdampfer (14) angeordneten Heizwärmetauscher (16),
wobei ein Mengenverhältnis eines den Verdampfer (14) durchströmenden Luftstromanteils zu einem an dem Verdampfer (14) vorbeigeführten Luftstromanteil mittels einer verschwenkbaren Verdampferbypassklappe (20) einstellbar ist und wobei ein Mengenverhältnis eines den Heizwärmetauscher (16) durchströmenden Luftstromanteils zu einem an dem Heizwärmetauscher (16) vorbeigeführten Luftstromanteil mittels einer verschwenkbaren Temperaturmischklappe (26) einstellbar ist, wobei die Temperaturmischklappe (26) und die Verdampferbypassklappe (20) mechanisch miteinander verbunden und ihre Verschwenkbewegungen dadurch zwangsgekoppelt sind, eine Temperatursensorik zur Erfassung der jeweils aktuellen Innenraumtemperatur und eine mit der Temperatursensorik und der Klimatisierungsvorrichtung (10) zu einem Temperaturregelkreis verbundene Steuereinheit mit einer Schnittstelle zur Einstellung einer Zieltemperatur (Tz) verfügt, **dadurch gekennzeichnet, dass** bei einer eingestellten Zieltemperatur (Tz) unterhalb einer ersten, niedrigeren Grenztemperatur (T1) Variationen der Innenraumtemperatur allein durch entsprechende Variation des Verdampferbetriebs angesteuert werden und bei einer eingestellten Zieltemperatur (Tz) zwischen der ersten Grenztemperatur (T1) und einer zweiten, höheren Grenztemperatur (T2) Variationen der Innenraumtemperatur allein durch entsprechende Variation der Stellung der Verdampferbypassklappe (20) angesteuert werden.

2. Verfahren nach Anspruch 1,
**dadurch gekennzeichnet,**
**dass** bei einer eingestellten Zieltemperatur (Tz) oberhalb der zweiten Grenztemperatur (T2) Variationen der Innenraumtemperatur allein durch entsprechende Variation der Temperaturmischklappe (26) angesteuert werden.

## Claims

1. Method for temperature regulation in the interior compartment of a motor vehicle which has a climate control apparatus (10) for a motor vehicle, comprising
- an inlet channel (18) for the introduction of an air stream,
- an evaporator (14), which can be flowed through at least by parts of the air stream, of a refrigerant circuit, and
- a heating heat exchanger (16), which can be flowed through at least by parts of the air stream and which is arranged downstream of the evaporator (14) in a flow direction,
wherein a flow rate ratio of an air stream fraction flowing through the evaporator (14) to an air stream fraction conducted past the evaporator (14) is adjustable by means of a pivotable evaporator bypass flap (20), and wherein a flow rate ratio of an air stream fraction flowing through the heating heat exchanger (16) to an air stream fraction conducted past the heating heat exchanger (16) is adjustable by means of a pivotable temperature mixing flap (26), wherein the temperature mixing flap (26) and the evaporator bypass flap (20) are mechanically connected to one another and their pivoting movements are thus positively coupled, a temperature sensor arrangement for detecting the respectively prevailing interior compartment temperature, and a control unit, which is connected to the temperature sensor arrangement and to the climate control apparatus (10) to form a temperature regulation loop and which has an interface for the setting of a target temperature (Tz), **characterized in that**, in the case of a set target temperature (Tz) below a first, relatively low limit temperature (T1), variations of the interior compartment temperature are actuated exclusively through corresponding variation of the evaporator operation, and in the case of a set target temperature (Tz) between the first limit temperature (T1) and a second, relatively high limit temperature (T2), variations of the interior compartment temperature are actuated exclusively through corresponding variation of the position of the evaporator bypass flap (20).

2. Method according to Claim 1,
**characterized**
**in that**, in the case of a set target temperature (Tz) above the second limit temperature (T2), variations of the interior compartment temperature are actuated exclusively through corresponding variation of the temperature mixing flap (26).

## Revendications

1. Procédé de régulation de température dans l'habitacle d'un véhicule automobile disposant d'un dispositif de climatisation (10) pour un véhicule automobile, comprenant :
- un canal d'admission (18) pour l'introduction d'un flux d'air ;
- un évaporateur (14) d'un circuit d'agent frigorigène, ledit évaporateur pouvant être traversé au moins par des parties du flux d'air ; et
- un échangeur de chaleur thermique (16) pouvant être traversé au moins par des parties du flux d'air et disposé derrière l'évaporateur (14) dans la direction d'écoulement ;
un rapport de quantité d'une portion de flux d'air traversant l'évaporateur (14) par rapport à une portion de flux d'air passant devant l'évaporateur (14) pouvant être réglé au moyen d'un clapet de dérivation d'évaporateur (20) pouvant être basculé ; et un rapport de quantité d'une portion de flux d'air traversant l'échangeur de chaleur thermique (16) par rapport à une portion de flux d'air passant devant l'échangeur de chaleur thermique (16) pouvant être réglé au moyen d'un clapet de mélange de température (26) pouvant être basculé, le clapet de mélange de température (26) et le clapet de dérivation d'évaporateur (20) étant couplés entre eux de façon mécanique et leurs mouvements de bascule se trouvant ainsi en couplage forcé, le dispositif de climatisation disposant en outre d'un système de détection de température permettant de détecter la température d'habitacle respectivement actuelle et d'une unité de commande reliée au système de détection de température et au dispositif de climatisation (10) de façon à former un circuit de régulation de température, l'unité de commande étant pourvue d'une interface de réglage d'une température cible (Tz), **caractérisé en ce qu'**en cas de température cible (Tz) réglée en dessous d'une première température limite (T1) inférieure, les variations de la température d'habitacle sont commandées uniquement par la variation correspondante de l'activité de l'évaporateur et en cas de température cible (Tz) réglée entre la première température limite (T1) et une deuxième température limite (T2) supérieure, les variations de la température d'habitacle sont commandées uniquement par la variation correspondante de la position du clapet de dérivation d'évaporateur (20).

2. Procédé selon la revendication 1,
**caractérisé en ce que**,
en cas de température cible (Tz) réglée au-dessus de la deuxième température limite (T2), les variations de la température d'habitacle sont commandées uniquement par la variation correspondante du clapet de mélange de température (26).
